# FASCICULE DE BREVET EUROPEEN

(11) **EP 2 288 631 B1**
(45) Date de publication et mention de la délivrance du brevet: **25.10.2017**
(21) Numéro de dépôt: 09772685.5
(22) Date de dépôt: 02.06.2009
(51) Int. Cl.: C08F 220/56, C08F 220/58, C08F 220/60, C08J 3/075, C08J 3/12, C09K 8/512, C09K 8/516, C09K 8/575, E21B 33/138, E21B 43/25

(54) **PROCEDE DE TRAITEMENT DES FORMATIONS ROCHEUSES ET POLYAMPHOLYTES**
VERFAHREN ZUR BEHANDLUNG VON FELSFORMATIONEN UND POLYAMPHOLYTE
METHOD FOR THE TREATMENT OF ROCK FORMATIONS AND POLYAMPHOLYTES

(30) Priorité: 10.06.2008 FR 0853846
(43) Date de publication de la demande: 02.03.2011
(73) Titulaire: Poweltec, 92500 Rueil-Malmaison (FR)
(72) Inventeur: BRAUN, Olivier, F-81100 Castres (FR); MALLO, Paul, F-78290 Croissy-sur-Seine (FR); ZAITOUN, Alain, F-75010 Paris (FR)
(74) Mandataire: GIE Innovation Competence Group
(86) Numéro de dépôt international: PCT/FR2009/051030
(87) Numéro de publication internationale: WO 2010/001002

(56) Documents cités:
- EP-A1- 0 122 073
- EP-A1- 1 113 029
- EP-A2- 0 082 657
- US-A- 4 726 906

## Description

La présente invention a pour objet de nouveaux polymères latex inverses et microlatex inverses ainsi que leur utilisation pour préparer des microgels épaississants et/ou stabilisants et/ou sélectifs de réduction de perméabilité des puits dans le domaine de l'industrie du pétrole et du gaz (hydrocarbures CO2), notamment de la Prévention des Venues d'Eau, du Contrôle de Profils, de la Prévention des Venues de Sable, et de la Récupération Assistée du Pétrole.

Les procédés de Prévention des Venues d'Eau, appliqués aux puits producteurs d'huile ou de gaz permettent un abaissement durable de la fraction d'eau produite par le puits et une augmentation de la production d'huile ou de gaz, si la production globale du puits peut être maintenue ou augmentée. On met parfois en oeuvre des polymères, mais ceux-ci restent limités à des perméabilités de zones productrices d'eau relativement peu élevées (en moyenne inférieures à 300 milliDarcy) à cause de la limitation en taille de ces polymères. Comme ils sont en plus mécaniquement, thermiquement et chimiquement fragiles, ils sont rarement utilisés seuls et on leur adjoint le plus souvent des agents stabilisants et/ou réticulants. On préfère utiliser des gels de polymères qu'il s'agisse de gels colmatants, ou de gels dilués (ayant donc une faible concentration en polymère et en réticulant). Le mélange polymère-réticulant est alors injecté dans le puits à traiter avec une cinétique de gélification retardée, le gel ne prenant qu'au bout de quelques heures dans la formation autour du puits. Ces procédés sont cependant considérés comme peu fiables et utilisent souvent des produits polluants à base de sels de chrome ou de résines. De plus, les procédés à base de gels ne permettent de contrôler ni la cinétique de gélification, ni la consistance du gel ; ils engendrent un risque élevé d'endommagement du puits, ils provoquent la rétention et l'adsorption de l'agent réticulant sur la roche réservoir, et ils ne permettent qu'avec difficulté le placement du gel dans les zones à eau et à éviter l'envahissement des zones à huile ou à gaz.

les demandes de brevet européens EP 0 082 657 et EP 0 122 073 ainsi que le brevet américain 4,726,906 divulgue l'utilisation de polyampholytes dans le traitement des puits de pétrole.

Le nombre grandissant de champs matures, et le développement des puits complexes (puits horizontaux, puits sous-marins, puits multi-branches) combinés au manque de fiabilité des techniques de séparation de fonds, ont rendu très intéressants, les traitements auto-sélectifs de Prévention de Venues d'Eau, c'est-à-dire des traitements pouvant être injectés à travers tout l'intervalle ouvert du puits (injection dite "bullhead"), sans utiliser de moyens mécaniques pour traiter des zones localisées. Dans les cas de tels traitements autosélectifs, comme les couches à huile ou à gaz ne sont pas protégées en cours d'injection, il est impératif d'injecter une formulation affectant peu la perméabilité à l'huile ou au gaz. Les polymères hydrosolubles ou les gels faibles de polymères hydrosolubles, qui sont des produits dits RPM (Relative Permeability Modifiers) réduisent fortement la perméabilité à l'eau des roches, tout en affectant peu la perméabilité à l'huile ou au gaz. Ils agissent en formant une couche adsorbée de polymère à la paroi des pores, qui reste gonflée au passage de l'eau, mais se contracte sous l'effet des forces capillaires au passage de l'huile ou du gaz. Un bon produit RPM doit donc s'adsorber fortement et de façon irréversible sur la roche, et former une épaisseur de couche bien adaptée à la dimension de pore, avoir une bonne stabilité mécanique, chimique et thermique, ainsi qu'une consistance « molle », lui permettant de se contracter facilement au passage de l'huile ou du gaz.

Dans le traitement autosélectif (« bullhead »), il est également impératif que le placement du produit injecté dans les différentes couches soit optimisé. L'opérateur cherchera à minimiser la profondeur de pénétration dans les couches à huile ou à gaz, de manière à envahir préférentiellement les couches à eau. Le contrôle du placement peut se faire soit par l'utilisation de produits de diversion permettant de protéger temporairement les zones à huile ou à gaz, soit grâce à une propriété inhérente à l'agent RPM, par exemple en choisissant un produit de dimension suffisamment grande (quelques microns) pour ne pas pénétrer dans les couches à huile (généralement les moins perméables).

Lorsque l'on applique les procédés de Prévention des Venues d'Eau aux puits injecteurs d'eau, cette application encore appelée « Traitement de Contrôle des Profils » permet, en injectant un produit de type polymère ou gel de polymère dans les drains de forte perméabilité, de mieux balayer le réservoir et d'éviter le phénomène dit de "water channeling", couramment observé dans les réservoirs hétérogènes. Comme indiqué précédemment, les microgels, du fait de leur grande taille, vont spontanément envahir préférentiellement les drains de plus forte perméabilité, dans lesquels circule l'eau, et vont très peu se propager dans les zones de faible perméabilité, les plus saturées en huile. Ils présentent de ce fait des propriétés de placement supérieures aux polymères.

En matière de Prévention des Venues de Sable, l'industrie pétrolière et gazière utilise parfois des formulations à base de résines. Le mélange résine-durcisseur est injecté dilué dans un solvant hydrocarboné dans la zone à traiter autour du puits. Le temps de prise est suffisamment retardé pour permettre l'injection des produits sous faible pression. Le puits est ensuite fermé pour permettre à la résine de durcir et de consolider la roche. Une fois durcie, la résine se comporte comme un solide. Il est donc impératif, si l'on veut maintenir l'écoulement des fluides dans la zone traitée, ou bien d'ajouter à la formulation un agent chimique permettant de former des chenaux dans la résine, ou bien d'injecter un gaz inerte en cours de durcissement. Les procédés de Prévention de Venues de Sable à base de résine sont cependant relativement peu utilisés car ils mettent en oeuvre des composés organiques souvent peu sûrs et toxiques, leur cinétique de prise est difficile à contrôler. L'intervalle traité ne peut excéder quelques pieds d'épaisseur et un à deux pieds de profondeur et les risques d'endommagement du puits sont importants.

La Récupération Assistée des Hydrocarbures par injection de polymères, consiste à épaissir l'eau injectée par ajout de faibles concentrations de polymères hydrophiles, de manière à assurer un meilleur contrôle de mobilité du fluide déplaçant (eau) par rapport au fluide déplacé (hydrocarbure). Le polymère le plus utilisé pour cette application est un copolymère acrylamide/acrylate linéaire et de haut poids moléculaire, dont le pouvoir viscosifiant est très élevé et qui s'adsorbe peu sur la roche réservoir. Cependant, ce type de polymère est peu stable au delà de 70°C, peu stable au cisaillement et est très sensible aux sels qui induisent une diminution importante de son pouvoir viscosifiant.

Les inventeurs ont donc cherché à développer de nouveaux composés qui puissent être mis en oeuvre pour préparer des microgels épaississants et/ou stabilisants et/ou sélectifs de réduction de perméabilité des puits dans le domaine de l'industrie du pétrole, et présentant des propriétés améliorées plus particulièrement en termes de Prévention des Venues d'Eau, de Contrôle de Profils, de Prévention des Venues de Sable, et de Récupération Assistée du Pétrole.
C'est pourquoi, selon un premier aspect, l'invention a pour objet un procédé de traitement de formations rocheuses souterraines ou non et plus particulièrement de puits producteurs à huile ou à gaz, de puits injecteurs d'eau visant à balayer les réservoirs d'hydrocarbures (huile ou gaz) ou de puits de gaz de mine ou de puits de stockage de gaz caractérisée en ce qu'il comprend une étape d'injection sur, ou dans, ladite formation rocheuse ou dans ledit puits, du microgel obtenu par dilution dans l'eau d'un latex inverse auto-inversible, ou d'un microlatex inverse auto-inversible d'un polyélectrolyte réticulé, obtenu par copolymérisation en présence d'un agent de réticulation, d'acide 2-méthyl 2-[(1-oxo 2-propènyl) amino] 1-propanesulfonique libre, partiellement, ou totalement salifiée, d'au moins un monomère cationique choisi parmi le chlorure de 2,N,N,N-tétraméthyl 2-[(1-oxo 2-propènyl) amino] propanammonium (AMPTAC), le chlorure de N,N,N-triméthyl 3-[(1-oxo 2-propènyl) amino] propanammonium (APTAC), le chlorure de diallyl diméthylammonium (DADMAC), le chlorure de N,N,N-triméthyl 2-[(1-oxo 2-propènyl)amino] éthanammonium, le chlorure de N,N,N-triméthyl 2-[(1-oxo 2- méthyl 2-propènyl) amino] éthanammonium, le chlorure de N,N,N-triméthyl 3-[(1-oxo 2-méthyl 2-propènyl) amino] propanammonium (MAPTAC) et d'au moins un monomère neutre choisi parmi l'acrylamide, le N,N- diméthyl acrylamide, le N-[2-hydroxy 1,1-bis(hydroxyméthyl) éthyl] propènamide ou l'acrylate de (2-hydroxy éthyle).
Dans le procédé tel que défini ci-dessus, le latex inverse auto-inversible, ou le microlatex inverse auto-inversible mis en oeuvre conduit après gonflement dans des fluides aqueux à des microgels, déformables, stables en température, stables mécaniquement, lorsqu'ils sont soumis à un fort cisaillement, et s'adsorbant de manière irréversible.
Par copolymérisation, on signifie dans le procédé tel que défini ci-dessus, que la réaction de polymérisation met en oeuvre au moins trois monomères différents. Elle peut cependant impliquer plus de trois monomères différents.
Selon un aspect particulier de la présente invention, le latex inverse auto-inversible éventuellement mis en oeuvre dans le procédé tel que défini ci-dessus, comprend de 20% à 70% massique, et de préférence de 25% à 60% massique de polyélectrolyte réticulé.
Selon un autre aspect particulier de la présente invention, le microlatex inverse auto-inversible éventuellement mis en oeuvre dans le procédé tel que défini ci-dessus, comprend de 15 % à 40 % massique, et de préférence de 20% à 30% massique dudit polyélectrolyte.

Selon un autre aspect particulier du procédé tel que défini ci-dessus, ledit latex inverse ou ledit microlatex inverse, est préalablement séché et atomisé avant d'être dilué dans l'eau pour former ledit microgel.

Selon cet aspect particulier, ledit latex inverse ou ledit microlatex inverse est préalablement concentré avant séchage et atomisation.

L'invention a aussi pour objet un latex inverse auto-inversible comprenant de 20% à 70% massique, et de préférence de 25% à 60% massique d'un polyélectrolyte réticulé, obtenu par copolymérisation d'acide 2-méthyl 2-[(1-oxo 2-propènyl) amino] 1-propanesulfonique libre, partiellement, ou totalement salifiée, de chlorure de N,N,N-triméthyl 3-[(1-oxo 2-propènyl) amino] propanammonium, et d'au moins un monomère neutre choisi parmi l'acrylamide, le N,N-diméthyl acrylamide, le N-[2-hydroxy 1,1-bis(hydroxyméthyl) éthyl] propénamide ou l'acrylate de (2-hydroxy éthyle) et un microlatex inverse auto-inversible comprenant de 15 % à 40 % massique, et de préférence de 20 % à 30 % massique d'un polyélectrolyte réticulé, obtenu par copolymérisation d'acide 2-méthyl 2-[(1-oxo 2-propènyl) amino] 1-propanesulfonique libre, partiellement, ou totalement salifiée, de chlorure de N,N,N-triméthyl 3-[(1-oxo 2-propènyl) amino] propanammonium avec au moins un monomère neutre choisi parmi l'acrylamide, le N,N-diméthyl acrylamide, le N-[2-hydroxy 1,1-bis(hydroxyméthyl) éthyl] propénamide ou l'acrylate de (2-hydroxy éthyle).

Dans la définition du procédé ainsi que dans les définitions du latex inverse auto-inversible et du microlatex inverse auto-inversible, objets de la présente invention, par partiellement ou totalement salifiée, on signifie dans le cadre de la présente invention que l'acide 2-méthyl 2-[(1-oxo 2-propènyl) amino] 1-propanesulfonique (dénommé aussi acide 2-acrylamido-2-méthyl propanesulfonique ou AMPS™) est partiellement ou totalement salifiée sous forme d'un sel de métal alcalin tel que par exemple le sel de sodium ou le sel de potassium, ou d'un sel d'ammonium.

Dans la définition du procédé tel que défini ci-dessus ainsi que dans les définitions du latex inverse auto-inversible et du microlatex inverse auto-inversible, objets de la présente invention, par polyélectrolyte réticulé, on désigne un polyélectrolyte non linéaire se présentant à l'état de réseau tridimensionnel insoluble dans l'eau, mais gonflable dans l'eau et conduisant donc à l'obtention d'un gel chimique.

Dans la définition du procédé tel que défini ci-dessus ainsi que dans les définitions du latex inverse auto-inversible et du microlatex inverse auto-inversible, objets de la présente invention, l'agent de réticulation est choisi parmi l'acide diallyloxy acétique ou un son sel de sodium, le triallyl amine, le diallylurée, le triméthylol propanetriacrylate, le diméthacrylate d'éthylèneglycol, le diacrylate de diéthylèneglycol, le méthylène bis(acrylamide) ou un mélange de plusieurs de ces composés.

Selon un aspect particulier du procédé, du latex inverse auto-inversible et du microlatex inverse auto-inversible, objets de la présente invention, l'agent de réticulation est mis en oeuvre dans la proportion molaire exprimée par rapport aux monomères mis en oeuvre, de 0,001 % à 0,5 %, et de préférence de 0,005 % à 0,25 %.

Selon un autre aspect particulier du procédé, du latex inverse auto-inversible et du microlatex inverse auto-inversible, objets de la présente invention, la proportion en unité monomérique acide 2-méthyl 2-[(1-oxo 2-propènyl) amino] 1-propanesulfonique, dans le polyélectrolyte est comprise entre 1 % et 75 % molaire, plus particulièrement entre 5 % et 40 % molaire.

Selon un autre aspect particulier du procédé, du latex inverse auto-inversible et du microlatex inverse auto-inversible, objets de la présente invention, la proportion en unité monomère neutre dans le polyélectrolyte est comprise entre 10 % et 90 % molaire et plus particulièrement comprise entre 50 % et 70 % molaire.

Selon un autre aspect particulier du procédé, du latex inverse auto-inversible et du microlatex inverse auto-inversible, objets de la présente invention, la proportion en unité monomère cationique dans le polyélectrolyte est comprise entre 1% et 75 % molaire plus particulièrement comprise entre 3 % et 30 % molaire.

Le latex inverse auto-inversible éventuellement mis en oeuvre dans ledit procédé ainsi que le latex inverse auto-inversible, objet de la présente invention comprennent un système émulsionnant de type eau dans huile (E/H) constitué soit d'un seul tensioactif soit d'un mélange de tensioactifs à condition que ledit mélange ait une valeur de HLB suffisamment faible pour induire des émulsions eau dans huile. Comme agent émulsionnant de type eau - dans huile, il y a par exemple les esters de sorbitan, comme l'oléate de sorbitan, comme celui commercialisé par la société SEPPIC sous le nom MONTANE™ 80, l'isostéarate de sorbitan, comme celui commercialisé par la société SEPPIC sous le nom MONTANE™ 70 ou le sesquioléate de sorbitan comme celui commercialisé par la société SEPPIC sous le nom MONTANE™ 83. Il y aussi certains esters de sorbitan polyéthoxylés, par exemple le monooléate de sorbitan pentaéthoxylé comme celui commercialisé par la société SEPPIC sous le nom MONTANOX™ 81 ou l'isostéarate de sorbitan pentaéthoxylé comme celui commercialisé sous le nom MONTANOX™ 71 par la société SEPPIC. Il y a encore l'alcool oléocétylique diéthoxylé comme celui commercialisé sous le nom SIMULSOL™ OC 72 par la société SEPPIC, l'acrylate de lauryle tétraéthoxylé comme celui commercialisé sous le nom BLEMMER™ ALE 200 ou les polyesters de poids moléculaire compris entre 1000 et 3000, produits de la condensation entre un acide poly(isobutènyl) succinique ou son anhydride et un polyéthylène glycol, tels que l'HYPERMER™ 2296 commercialisé par la société UNIQEMA ou enfin les copolymères à blocs de poids moléculaire compris entre 2500 et 3500, comme l'HYPERMER™ B246 commercialisé par la société UNIQEMA ou le SIMALINE™ IE 200 commercialisé par la société SEPPIC.

Le latex inverse auto-inversible éventuellement mis en oeuvre dans ledit procédé ainsi que le latex inverse auto-inversible, objet de la présente invention comprennent plus particulièrement de 2% à 8% massique de système émulsionnant de type eau dans huile (E/H).

Le latex inverse éventuellement mis en oeuvre dans ledit procédé ainsi que le latex inverse auto-inversible, objet de la présente invention comprennent un système émulsionnant de type huile dans eau (H/E), constitué soit d'un seul tensioactif soit d'un mélange de tensioactifs à condition que ledit mélange ait une valeur de HLB suffisamment élevée pour induire des émulsions huile dans eau. Comme agent émulsionnant de type huile dans eau, il y a par exemple les esters de sorbitan éthoxylés comme l'oléate de sorbitan polyéthoxylé avec 20 moles d'oxyde d'éthylène, commercialisé par la société SEPPIC sous le nom de MONTANOX™ 80, le laurate de sorbitan polyéthoxylé avec 20 moles d'oxyde d'éthylène , commercialisé par la société SEPPIC sous le nom de MONTANOX™ 20, l'huile de ricin polyéthoxylé avec 40 moles d'oxyde d'éthylène commercialisé sous le nom SIMULSOL™ OL50, l'alcool oléodécylique décaéthoxylé, commercialisé par la société SEPPIC sous le nom SIMULSOL™ OC 710, l'alcool laurique heptaéthoxylé commercialisé sous le nom SIMULSOL™ P7 ou le monostéarate de sorbitan polyéthoxylé avec 20 moles d'oxyde d'éthylène commercialisé par la société SEPPIC sous le nom MONTANOX™ 60.

Le latex inverse auto-inversible éventuellement mis en oeuvre dans ledit procédé ainsi que le latex inverse auto-inversible, objets de la présente invention, comprennent plus particulièrement de 3% à 8% massique d'un système émulsionnant de type huile dans eau (H/E).

Le micro latex inverse auto-inversible éventuellement mis en oeuvre dans le procédé objet de la présente invention ainsi que le microlatex inverse auto-inversible, objets de la présente invention, comprennent un système émulsionnant apte à assurer la formation de microlatex inverses auto-inversible, c'est-à-dire un système tensioactif comprenant au moins un tensioactif de type eau dans huile (E/H), tel que par exemple les esters de sorbitan, comme l'oléate de sorbitan, comme celui commercialisé par la société SEPPIC sous le nom MONTANE™ 80, l'isostéarate de sorbitan, comme celui commercialisé par la société SEPPIC sous le nom MONTANE™ 70 ou le sesquioléate de sorbitan comme celui commercialisé par la société SEPPIC sous le nom MONTANE™ 83, et au moins un tensioactif de type huile dans eau (H/E), tel que par exemple, les esters de sorbitan éthoxylés comme les hexaoléate de sorbitan éthoxylé comme le G1096, G 1086 et G 1087 commercialisé par Uniquema ledit système apte à assurer la formation de micro latex inverses auto-inversibles, ayant un nombre HLB total supérieur ou égal à 8,5 et inférieur ou égal à 11 et de préférence supérieur ou égal à 9,5 et inférieur ou égal à 10.

Au sens de la présente invention, le nombre HLB est calculé par la formule HLB = 20.(1 - Iₛ/Iₐ), dans laquelle Iₛ représente l'indice de saponification du système émulsionnant et Iₐ l'indice d'acide gras de départ ou du mélange d'acides gras de départ comme décrit par N. Schönfeld dans le fascicule intitulé "Surface active éthylène oxide adducts", page 228.

Le micro latex inverse auto-inversible éventuellement mis en oeuvre dans le procédé objet de la présente invention ainsi que le microlatex inverse auto-inversible, objets de la présente invention, comprennent plus particulièrement entre 8 % et 20 % massique, d'agents tensioactifs.

Selon un autre aspect particulier de la présente invention, l'huile constitutive de la phase huile du latex inverse auto-inversible ou du micro latex inverse auto-inversible mis en oeuvre dans le procédé tel que défini ci-dessus et/ou objets de la présente invention, est généralement choisie par les huiles minérales commerciales contenant des hydrocarbures saturés comme les paraffines, les isoparaffines, les cycloparaffines, présentant à température ambiante, une densité entre 0,7 et 0,9 et un point d'ébullition supérieur à environ 250°C, telle que par exemple le MARCOL™52, l'ISOPAR™ M ou l'ISOPAR™ L commercialisés par EXXON CHEMICAL ; l'isohexadécane, identifié dans Chemical Abstracts par le numéro RN = 93685-80-4 et qui est un mélange d'isoparaffines en C₁₂, C₁₆ et C₂₀ contenant au moins 97% d'isoparaffines en C₁₆, parmi lesquelles le constituant principal est le 2,2,4,4,6,8,8-heptaméthyl nonane (RN = 4390-04-9) ; il est commercialisé en France par la société Bayer ou l'isododécane commercialisé aussi en France par la société Bayer.

La phase huile représente plus particulièrement de 15% à 40%, et de préférence de 20% à 25%, de la masse totale du latex inverse auto-inversible éventuellement mis en oeuvre dans le procédé tel que défini ci-dessus et/ou objet de la présente invention, et la phase aqueuse représente de 2% à 40% de sa masse totale.

La phase huile représente de 25% à 50%, et de préférence de 30% à 40%, de la masse totale du microlatex inverse auto-inversible éventuellement mis en oeuvre dans le procédé tel que défini ci-dessus, et/ou objet de la présente invention, et la phase aqueuse représente de 15% et 50% de sa masse totale.

Selon un aspect plus particulier de la présente invention, celle-ci a pour objet un latex inverse auto-inversible ou un microlatex inverse auto-inversible d'un terpolymère réticulé d'acide 2-méthyl 2-[(1-oxo 2-propènyl) amino] 1-propanesulfonique partiellement ou totalement salifié sous forme de sel de sodium, d'acrylamide et de chlorure de N,N,N-triméthyl 3-[(1-oxo 2-propènyl) amino] propanammonium.

Le latex inverse auto-inversible et le microlatex inverse auto-inversible sont préparés par des méthodes connues de l'homme du métier.

Le latex inverse auto-inversible, est préparé par le procédé comprenant :
- la préparation d'une phase aqueuse contenant entre autres les monomères, et au moins un agent réticulant et optionnellement divers additifs technologiques tels que: agent limiteur de chaîne, agent complexant d'espèces métalliques,
- la préparation d'une phase organique contenant entre autres l'huile et le système émulsionnant de type eau dans huile ;
- l'introduction de la phase aqueuse dans la phase grasse sous agitation puis soumise à l'action d'un cisaillement important à l'aide d'un appareil de type Ultra Turrax ou Silverson.
- la réaction de polymérisation sous barbotage d'azote, amorcée en présence d'un agent initiateur de radicaux libres.
- l'ajout du système émulsionnant de type huile dans eau.

Un tel procédé est par exemple décrit dans la demande de brevet européen EP 1 047716.

Le micro latex inverse auto-inversible, est préparé par le procédé comprenant :
- la préparation d'une phase aqueuse contenant entre autres les monomères, et au moins un agent réticulant et optionnellement divers additifs technologiques tels que: agent limiteur de chaîne, agent complexant d'espèces métalliques,
- la préparation d'une phase organique contenant en autre l'huile et le système tensioactif apte à former une microémulsion inverse, puis
- l'introduction de la phase aqueuse dans la phase grasse sous agitation,
- la réaction de polymérisation sous barbotage d'azote, amorcée en présence d'un agent initiateur de radicaux libres.

Un tel procédé est par exemple décrit dans la demande de brevet européen EP 1 371 692.

Selon un autre aspect, l'invention a pour objet un procédé de préparation de microgels par dilution d'un latex inverse auto-inversible ou d'un microlatex inverse auto-inversible d'un polyélectrolyte réticulé, objets de la présente invention, dans l'eau.

Dans le procédé tel que défini ci-dessus, la dilution est effectuée dans une eau, de préférence de salinité modérée, de préférence inférieure ou égale à 2% TDS (Total Dissolved Salt, ou sel dissout total), et si nécessaire sous agitation afin de briser l'émulsion. L'eau mise en oeuvre est généralement de l'eau de production ou un mélange d'eau de production et d'eau plus douce (eau de rivière, eau courante) ou tout autre type d'eau satisfaisant ayant la salinité désirée.

Le pH d'utilisation de la présente composition se situera dans un domaine entre 4 et 11, de préférence entre 5 et 9.

Le taux de dilution du polyampholyte selon le procédé tel que défini précédemment, est généralement compris entre 0,01% massique et 2,00% massique exprimé en masse de copolymère par rapport à la masse totale de la solution.

Le taux relativement faible de réticulation du polyampholyte objet de la présente invention, permet de conférer une élasticité et donc une capacité de déformation importante aux microgels. Ce type de microgels est qualifié de "déformable" ("soft microgels") par opposition à des microgels à fort taux de réticulation qui se rapprocheraient de sphères dures. Ces microgels présentant un degré élevé de capacité de déformation en font de potentiels bons agents RPM ("Relative Permeability Modifiers").

Selon un dernier aspect, l'invention a pour objet un procédé de traitement de formations rocheuses souterraines ou non et plus particulièrement de puits producteurs à huile ou à gaz, de puits injecteurs d'eau visant à balayer les réservoirs d'hydrocarbures (huile ou gaz) ou de puits de gaz de mine ou de puits de stockage de gaz, caractérisé en ce qu'il comprend une étape "injection dans sur ladite formation rocheuse ou dans ledit puits, du microgel obtenu par dilution dans l'eau, d'un latex inverse auto-inversible ou d'un microlatex inverse auto-inversible d'un polyélectrolyte réticulé, objets de la présente invention.

Le traitement de ce type de puits s'opère sur une épaisseur limitée sur la surface du puits (quelques mètres). Il concerne la prévention des venues d'eau, la prévention des venues de gaz, la prévention des venues de sable. Il peut également concerner le contrôle de profils, la récupération assistée par balayage (Chemical Flooding), à partir de puits injecteurs, la consolidation des sables, les traitements de colmatage (puits de mines), ou pour l'abandon de zones.

Par le traitement du puits mis en oeuvre, il se forme un film hydrophile polymérique, qui couvre la surface de la roche, qui évite ainsi son érosion.

Selon le type de puits, il pourra être judicieux d'injecter un préflush (eau, polymère seul, fluide de diversion, ...) avant d'injecter la solution de microgels.

Selon un aspect particulier du procédé, le traitement tel que défini ci-dessus s'adresse à des puits ou à des réservoirs dont la température est comprise entre 10°C et 200°C, de préférence entre 20°C et 150°C.

Selon un aspect particulier du procédé, le traitement tel que défini ci-dessus s'adresse à des réservoirs dont la salinité est comprise entre 0 g/L et 350 g/L TDS, de préférence entre 0 g/L et 100 g/L TDS.

Les principaux avantages de la technique du « film hydrophile » par rapport à la consolidation par les résines sont les suivants :
La mise en oeuvre de composés hydrosolubles non toxiques ;
L'utilisation de produits RPM, permettent naturellement de laisser passer l'huile ou le gaz.

La possibilité de traiter tout l'intervalle ouvert, sur de fortes épaisseurs et des profondeurs de plusieurs mètres.

Le placement favorisé dans les zones les plus perméables, généralement les plus productrices de sable et ou d'eau.

Les microgels selon l'invention présentent une forte énergie d'adsorption Ils ont une plus grande stabilité mécanique, chimique et thermique et permettent de former une couche adsorbée épaisse, donc un film protecteur plus épais que celui formé par un polymère linéaire de haut poids moléculaires.

Ils autorisent un contrôle beaucoup plus aisé du puits traité et limitent les risques de colmatage bien plus faibles qu'avec des formulations gélifiantes ou des résines.

A la suite du traitement opéré avec les microgels, lorsque le puits est remis en production, une réduction de la perméabilité à l'huile ou au gaz peut cependant intervenir dans la zone hydrocarbonée. Cependant, une fois que le fluide injecté (solution de microgels) est reproduit, celui-ci est remplacé par l'hydrocarbure. Du fait de la seule pression capillaire, les microgels qui sont de nature déformable, sont alors compressés à la paroi des restrictions de pore permettant ainsi à la phase hydrocarbonée de s'écouler vers le puits producteur sans altération de sa perméabilité relative.

Les exemples suivants illustrent l'invention sans toutefois la limiter.

### EXEMPLE 1 : Préparation d'un latex inverse auto-inversible de terpolymère AMPS/AM/APTAC (38,5/58,5/3), réticulé au MBA (polyampholyte (majoritairement anionique)

On prépare une phase organique en introduisant 27,5 g d'oléate de sorbitan (par exemple MONTANE™ 80) dans 220 g d'EXXSOL™ D100, constitué d'un mélange d'hydrocarbures cycloparaffiniques et paraffiniques. On y ajoute 0,1 g d'azo-bis-isobutyronitrile.

Parallèlement on prépare une phase aqueuse en introduisant :
- 50 g d'eau,
- 124 g d'acrylamide (AM),
- 481,2 g d'une solution commerciale à 55 % du sel de sodium de l'acide 2-acrylamido-2-méthyl propanesulfonique (AMPS),
- 24,8 g d'une solution commerciale à 75% du chlorure d'acrylamido propyl N,N,N-triméthyl ammonium (APTAC),
- 0,02 g de méthylène-bis-acrylamide (MBA),
- 0,45 g d'une solution commerciale à 40% de diéthylène triamine pentaacétate de sodium.

On ajuste le pH de la phase aqueuse à 5,3 en ajoutant la quantité requise d'acide 2-acrylamido-2-méthyl propanesulfonique (environ 1 g)

La quantité totale de phase aqueuse est alors ajustée à 682 g par ajout d'eau

La phase aqueuse est ensuite dispersée sous agitation dans la phase huile puis soumise à l'action d'un cisaillement important à l'aide d'une turbine de type Ultra-Turrax. ou Silverson. L'émulsion inverse ainsi obtenue est alors soumise à un barbotage d'azote de manière à enlever l'oxygène dissout. Après avoir refroidi l'émulsion inverse à environ 10°C, on initie la réaction de polymérisation par ajout du couple oxydoréducteur : Hydroperoxyde de cumène / métabisulfite de sodium. La température s'élève jusqu'à environ 80°C. On laisse ensuite la réaction de polymérisation se poursuivre jusqu'à l'obtention d'un palier de température indiquant la fin de la réaction. On maintient alors le milieu réactionnel à cette température de manière à éliminer les monomères résiduels, puis on ajoute à environ 35°C, 50 g d'alcool laurique éthoxylé à 7 moles. On filtre et on recueille le latex inverse ainsi obtenu.

### EXEMPLE 2 : Préparation d'une poudre de terpolymère AMPS/AM/APTAC (38,5/58,5/3), réticulé au MBA

On opère comme à l'exemple 1 en remplaçant dans la phase organique l'EXXSOL™ D 100 par l'ISOPAR™ M. On obtient le latex inverse auto-inversible attendu que l'on sèche par atomisation au moyen d'un atomiseur, par exemple un appareil DF520B fabriqué par la société ICF Industrie CYBEC (Maranello Italie), pour obtenir la poudre attendue

### EXEMPLE 3 Préparation d'un microlatex inverse auto-inversible de terpolymère AMPS/AM/APTAC (38,5/58,5/3), réticulé au MBA (polyampholyte majoritairement anionique)

On introduit sous agitation dans un réacteur de polymérisation :
- 389 g d'ISOPAR™ M (isoparaffine C13/C14),
- 31,3 g de MONTANE™ 80 (oléate de sorbitan),
- 108,7 g de MONTANOX™ 85 [Tri-oléate de sorbitan éthoxylé à 20 moles d'oxyde d'éthylène (20OE)]
- 336,1 g d'une solution commerciale à 55 % du sel de sodium de l'acide 2 acrylamido 2 méthyl propane sulfonique (AMPS),
- 86 g d'acrylamide (AM),
- 17,1 g d'une solution à 75% de chlorure d'acrylamidopropyltriméthyl ammonium (APTAC),
- 0,16 g de méthylène bis acrylamide (MBA).

La polymérisation est effectuée après barbotage d'azote à l'aide du couple rédox : hydroperoxyde de cumène et métabisulfite de sodium Après maintien du milieu réactionnel à la température finale de polymérisation pendant le temps nécessaire à la réduction des monomères résiduels., le microlatex attendu est récupéré après refroidissement et filtration

### EXEMPLE 4 : Préparation d'une poudre de terpolymère AMPS/AM/APTAC (38,5/58,5/3), réticulé au MBA

Le micro latex inverse auto-inversible préparé à l'exemple 3 est séché au moyen d'un atomiseur, par exemple un appareil DF520B fabriqué par la société ICF, Industrie CYBEC. (Maranello Italie) pour obtenir la poudre attendue.

### EXEMPLE 5 : Préparation d'un latex inverse auto-inversible de terpolymère AMPS/AM/APTAC (10/60/30), réticulé au MBA (polyampholyte majoritairement cationique)

On procède comme à l'exemple 1 en introduisant les charges suivantes dans la phase aqueuse :
- 150 g d'eau permutée,
- 130 g d'acrylamide (AM)
- 125 g d'une solution commerciale à 55 % du sel de sodium de l'acide 2 acrylamido 2 méthyl propane sulfonique (AMPS),
- 233g d'une solution commerciale à 75% du chlorure d'acrylamido-propyltriméthylammonium (APTAC),
- 0,02 g de méthylène bis acrylamide (MBA),
- 0,45 g d'une solution commerciale à 40% de diéthylène triamine pentaacétate de sodium.

On ajuste le pH de la phase aqueuse à 4 et on complète à 682 g par ajout d'eau permutée. On prépare une phase organique en introduisant 27,5 g de MONTANE™ 80 (oléate de sorbitan) dans 220 g d'ISOPAR™ M. On y ajoute 0,1 g d'azo-bis-isobutyronitrile.

### EXEMPLE 6- : Préparation d'une poudre de terpolymère AMPS/AM/APTAC (10/60/30), réticulé au MBA

Le latex inverse auto-inversible préparé à l'exemple 5 est séché au moyen d'un atomiseur, par exemple un appareil DF520B fabriqué par la société ICF, Industrie CYBEC. (Maranello Italie) pour obtenir la poudre attendue.

### EXEMPLE 7 : Evaluation des propriétés de microgels à partir du latex inverse préparé selon l'Exemple 1

Le microgel considéré, dénommé Microgel A, contient 37% en mole de fonctions anioniques et 3% de fonctions cationiques. Il a été soumis à un ensemble de tests comparables à ceux décrits dans l'exemple 5 de la demande de brevet français FR 2 874 617, relatifs a un microgel préparé selon le même mode de préparation contenant 40% de fonctions anioniques de même nature et aucune fraction cationique et dénommé ici Microgel B.

### 1 - Mesure de viscosités

On a préparé des solutions de Microgel A de différentes concentrations du latex inverse préparé comme selon l'Exemple 1, dans une eau contenant 2% de NaCl.

Le tableau suivant recense les viscosités obtenues à 30°C (en mPa.s) aux différentes concentrations C dans l'eau (Rhéomètre Low Shear, vitesse de cisaillement égale à 1 s⁻¹ et à 100 s⁻¹) :

| | | Viscosités des émulsions (mPas) | |
|---|---|---|---|
| | | Vitesse de cisaillement : 1 s⁻¹ | Vitesse de cisaillement : 100 s⁻¹ |
| | | Microgel B | Microgel A |
| Concentration en latex inverse (% massique) | 0,3 | 2,8 | 2,3 |
| | 0,5 | 14 | 11 |
| | 0,6 | 24 | 19 |
| | 0,77 | 54 | 36 |

Ces résultats font apparaître que les viscosités des solutions de Microgel A sont inférieures aux viscosités des solutions de Microgel B aux mêmes concentrations et dans le même solvant.

### 2 - Tests sur carbure de Silicium

L'évaluation des performances d'une solution de Microgel A (concentration = 0,1 % massique dans de l'eau NaCl à 2%) en milieu poreux est réalisée sur des massifs de carbure de Silicium de granulométrie 50 et 80 µm. La poudre de carbure de silicium est tassée dans une colonne munie de deux embouts. Sa perméabilité k initiale est déterminée à l'eau. Les fluides (eau, solution de microgels, eau d'élution, huile, ...) sont injectés dans le milieu poreux à débit constant. La perte de charge est déterminée aux bornes du massif et enregistrée tout au long de l'injection. La bonne propagation des solutions de Microgel A (contrôlée par une mesure de la viscosité en ligne) est vérifiée dans les deux types de massifs de SiC. L'adsorption est mesurée par la différence de propagation de deux fronts de microgels séparés par un balayage à l'eau. La réduction de mobilité Rm est mesurée lors de l'injection de la solution de microgel dans le massif. Les réductions de perméabilité à l'eau ou à l'huile sont déterminées par l'injection alternée de ces deux fluides à la suite de l'injection de la solution de microgel. La réduction de perméabilité à l'eau permet, connaissant la dimension de pore du milieu poreux, d'évaluer l'épaisseur de la couche de microgels adsorbée et ainsi de déterminer la taille des microgels sous leur forme adsorbée. On constate une réduction sélective de perméabilité avec une réduction importante de la perméabilité à l'eau (Rkw), sans réduction notable de la perméabilité à l'huile (Rko) (K : perméabilité en Darcy ; H : Epaisseur de couche adsorbée, en micromètre).
Conditions expérimentales : Température T=30°C ; eau+2% de NaCl ; (viscosité : 0,85 mPa.s) Huile : MARCOL™ 52 (viscosité 8,6 mPa.s), Concentration en Microgel A : 0,1 % massique.

| | K (Darcy) | Adsorption (µg/g) | Rm | Rkw | Rko | H (µm) |
|---|---|---|---|---|---|---|
| SiC 50 µm | 1,1 | 150 | 6,5 | 4,7 | 1,2 | 1,5 |
| SiC 80 µm | 2,8 | 123 | 5,0 | 2,2 | 1,2 | 1,3 |

Ces résultats font apparaître que le Microgel B (anionique) présente des niveaux d'adsorption inférieurs de 30% environ par rapport à ceux du Microgel A dans les mêmes milieux poreux, des niveaux de Rkw supérieurs de 20% environ et des valeurs de Rm inférieures de 20% environ. Les valeurs de Rko à restant très basses.

### 3 - Tests sur grès de Béréa

Les conditions expérimentales sont identiques à celles du précédent test

| | K (Darcy) | Adsorption (µg/g) | Rm | Rkw | Rko | H (µm) |
|---|---|---|---|---|---|---|
| Grès de Béréa | 0.15 | 150 | 10 | 25 | 1,2 | 1,4 |

Le comportement du Microgel A indique là encore une réduction très sélective de la perméabilité à l'eau par rapport à la perméabilité à l'huile, et un niveau d'adsorption important et supérieur à celui du Microgel B (de 50% environ sur le grès de Berea).

### 4 - Détermination de la taille des Microgels B par diffusion de lumière (Spectroscopie par Corrélation de Photons)

La taille déterminée est de l'ordre de 1,7 µm (concentration en microgels de 0,1 % massique) et confirme les ordres de grandeur obtenus lors de l'injection dans les massifs de carbure de silicium et dans le grès de Berea. Il est à noter que la taille du Microgel A est environ 15% inférieure à celle du Microgel B.

### 5 - Stabilité thermique

Un test de maintien à 150°C en conditions pseudo-anaérobie pendant une durée de 3 mois sans perte de viscosité met en évidence l'excellente stabilité thermique du Microgel A. Cette propriété, vérifiée aussi avec le Microgel B, s'explique par la présence de points de réticulation interne (Conditions expérimentales: eau+2% NaCl, concentration en microgels = 0,3%).

### 6 - Stabilité mécanique

Le Microgel A résiste à des contraintes de cisaillement élevées. En effet, on ne constate aucune perte de viscosité après un cisaillement à 10 000 tours/min (Ultra Turrax™) pendant 10 minutes.
Conditions expérimentales: eau+2% NaCl, température ambiante, concentration en microgels = 0,3%.

### 7 - Stabilité aux électrolytes

Le Microgel A est quasi-insensible à la salinité dans un domaine de 20 à 200 g/l TDS, en présence ou non d'ions divalents.
Conditions expérimentales: température ambiante, concentration en microgels: 0,1%.

### 8 - Stabilité au pH

Le Microgel A est quasi-insensible au pH dans un domaine entre 4 et 11. Conditions expérimentales: température ambiante, concentration en microgel = 0,1 %.

### 9 - Pouvoir floculant

Le test est réalisé sur grès de Berea concassé se présentant sous la forme d'un sable de granulométrie comprise entre 1 et 300 µm. Une analyse minéralogique indique une proportion de silice d'environ 70% et 12% de kaolinite. Le test est réalisé selon le protocole expérimental suivant. On introduit dans une éprouvette graduée de 250 mL 20 g de sable et 200 mL de saumure NaCl 2%. On introduit ensuite 50 ppm de Microgel A et on retourne l'éprouvette 3 fois de manière à bien mélanger l'ensemble. On mesure ensuite le temps de décantation entre les niveaux 160 et 80 mL. Le test est précédé d'un blanc sans adjonction de Microgel. Le Tableau ci-dessous donne les résultats d'un test comparatif entre le Microgel A et le Microgel B. Il montre que le pouvoir floculant du Microgel A sur le sable est très puissant et supérieur au pouvoir floculant du Microgel B. Ce test indique une forte capacité du Microgel A à s'adsorber sur le grès et à prévenir les mouvements de fines.

| Test | Temps de décantation (seconde)) |
|---|---|
| Blanc | 83 |
| Microgel A | 7 |
| Microgel B | 14 |

### EXEMPLE 8 : Evaluation des propriétés des microgels à partir du latex inverse préparé selon l'Exemple 5

Le microgel considéré, que dénommé Microgel C (dominante cationique), a été soumis à des tests comparatifs avec le Microgel A (dominante anionique). Pour ce faire, on a procédé à une injection dans du grès de Berea selon le protocole expérimental décrit dans l'exemple précédent, et à un test de floculation sur grès de Berea concassé. Les résultats sont rassemblés dans les deux tableaux ci-après.

| Test d'injection dans grès de Berea | K (Darcy) | Adsorption (µg/g) | Rm | Rkw | Rko | H (µm) |
|---|---|---|---|---|---|---|
| Microgel A | 0,15 | 150 | 30 | 25 | 1,2 | 1,4 |
| Microgel C | 0,19 | 230 | 51 | 41 | 4,2 | 2,0 |

| Test de Floculation | Temps de décantation (seconde)) |
|---|---|
| Blanc | 83 |
| Microgel A | 7 |
| Microgel C | 4 |

On remarque que le Microgel C présente une adsorption et un pouvoir floculant supérieurs au Microgel A, ce qui indique une plus forte capacité à retenir le sable. Par contre, les niveaux élevés de Rm, Rkw et Rko indiquent une injectivité réduite par rapport au Microgel A dans un grès de perméabilité moyenne.

### EXEMPLE 9 : Evaluation des propriétés des microgels à partir du microlatex inverse préparé selon l'Exemple 3

Le microgel considéré, dénommé Microgel D (de petite taille), a été soumis à des tests comparatifs avec le Microgel A (de composition chimique voisine, mais de plus grande taille). Pour ce faire, on a procédé à une injection dans du grès de Berea selon le protocole expérimental décrit dans l'exemple 7, et à un test de floculation sur grès de Berea concassé. Les résultats sont rassemblés dans les deux tableaux ci-après.

| Test d'injection dans grès de Berea | K (Darcy) | Adsorption (µg/g) | Rm | Rkw | Rko | H (µm) |
|---|---|---|---|---|---|---|
| Microgel A | 0,15 | 150 | 30 | 25 | 1,2 | 1,4 |
| Microgel D | 0,15 | 50 | 4 | 1,2 | 1,0 | 0,3 |

| Test Floculation | Temps de décantation (seconde)) |
|---|---|
| Blanc | 83 |
| Microgel A | 7 |
| Microgel D | 17 |

On remarque que le Microgel D présente une adsorption et un pouvoir floculant inférieurs au Microgel A, ce qui indique une moins forte capacité à retenir le sable. Par contre, les niveaux faibles de Rm, Rkw et Rko indiquent une injectivité très bonne par rapport au Microgel A dans un grès de perméabilité moyenne.

## Revendications

1. Procédé de traitement de formations rocheuses souterraines telles que des puits producteurs à huile ou à gaz, des puits injecteurs d'eau visant à balayer les réservoirs d'hydrocarbures ou des puits de gaz de mine ou des puits de stockage de gaz, ledit procédé étant **caractérisé en ce qu'**il comprend une étape d'injection sur ou dans ladite formation rocheuse ou dans ledit puits, d'un microgel obtenu par dilution dans l'eau d'un latex inverse auto-inversible, comprenant de 20 à 70% massique d'un polyélectrolyte réticulé, ou d'un microlatex inverse auto-inversible comprenant de 15 à 40% massique d'un polyélectrolyte réticulé,
ledit latex inverse auto-inversible ou ledit microlatex inverse auto-inversible étant obtenu par copolymérisation en présence d'un agent de réticulation, d'acide 2-méthyl 2-[(1-oxo 2-propènyl) amino] 1-propanesulfonique libre, partiellement, ou totalement salifié, d'au moins un monomère cationique choisi parmi le chlorure de 2,N,N,N-tétraméthyl 2-[(1-oxo 2-propènyl) amino] propanammonium, le chlorure de N,N,N-triméthyl 3-[(1-oxo 2-propènyl) amino] propanammonium, le chlorure de diallyl diméthylammonium, le chlorure de N,N,N-triméthyl 2-[(1-oxo 2- propènyl) amino] éthanammonium, le chlorure de N,N,N-triméthyl 2-[(1-oxo 2- méthyl 2- propènyl) amino] éthanammonium, le chlorure de N,N,N-triméthyl 3-[(1-oxo 2-méthyl 2-propènyl) amino] propanammonium et d'au moins un monomère neutre choisi parmi l'acrylamide, le N,N-diméthyl acrylamide, le N-[2-hydroxy 1,1-bis(hydroxyméthyl) éthyl] propénamide, ou l'acrylate de (2-hydroxy éthyle),
l'agent de réticulation étant choisi parmi l'acide diallyloxy acétique ou son sel de sodium, le triallylamine, le diallylurée, le triméthylol propanetriacrylate, le diméthacrylate d'éthylèneglycol, le diacrylate de diéthylèneglycol, le méthylène bis(acrylamide) ou un mélange de plusieurs de ces composés.

2. Latex inverse auto-inversible comprenant de 20% à 70% massique d'un polyélectrolyte réticulé, obtenu par copolymérisation, en présence d'un agent de réticulation, d'acide 2-méthyl 2-[(1-oxo 2-propènyl) amino] 1-propanesulfonique libre, partiellement ou totalement salifié, de chlorure de N,N,N-triméthyl 3-[(1-oxo 2-propènyl) amino] propanammonium, et d'au moins un monomère neutre choisi parmi l'acrylamide, le N,N-diméthyl acrylamide, le N-[2-hydroxy 1,1-bis(hydroxyméthyl) éthyl] propénamide ou l'acrylate de (2-hydroxy éthyle),
l'agent de réticulation étant choisi parmi l'acide diallyloxy acétique ou son sel de sodium, le triallylamine, le diallylurée, le triméthylol propanetriacrylate, le diméthacrylate d'éthylèneglycol, le diacrylate de diéthylèneglycol, le méthylène bis(acrylamide) ou un mélange de plusieurs de ces composés.

3. Microlatex inverse auto -inversible comprenant de 15 % à 40 % massique d'un polyélectrolyte réticulé, obtenu par copolymérisation, en présence d'un agent de réticulation, d'acide 2-méthyl 2-[(1-oxo 2-propènyl) amino] 1-propanesulfonique libre, partiellement, ou totalement salifié, de chlorure de N,N,N-triméthyl 3-[(1-oxo 2-propènyl) amino] propanammonium avec au moins un monomère neutre choisi parmi l'acrylamide, le N,N-diméthyl acrylamide, le N-[2-hydroxy 1,1- bis(hydroxyméthyl) éthyl] propénamide ou l'acrylate de (2-hydroxy éthyle),
l'agent de réticulation étant choisi parmi l'acide diallyloxy acétique ou son sel de sodium, le triallylamine, le diallylurée, le triméthylol propanetriacrylate, le diméthacrylate d'éthylèneglycol, le diacrylate de diéthylèneglycol, le méthylène bis(acrylamide) ou un mélange de plusieurs de ces composés.

4. Latex inverse auto-inversible selon la revendication 2, comprenant de 25% à 60% massique de polyélectrolyte réticulé.

5. Microlatex inverse auto-inversible selon la revendication 3, comprenant de 20% à 30% massique de polyélectrolyte réticulé.

6. Latex inverse auto-inversible ou microlatex inverse auto-inversible réticulé tel que défini à l'une des revendications 2 à 5, pour lequel la proportion en unité monomérique acide 2-méthyl 2-[(1-oxo 2-propènyl) amino] 1-propanesulfonique libre, dans le polyélectrolyte réticulé, est comprise entre 1% et 75% molaire.

7. Latex inverse auto-inversible ou micro latex inverse auto -inversible tel que défini à la revendication 6, pour lequel la proportion en monomère cationique dans le polyélectrolyte réticulé est comprise entre 5 % et 40 % molaire.

8. Latex inverse auto-inversible ou microlatex inverse auto-inversible tel que défini à l'une des revendications 2 à 7, pour lequel la proportion en unité monomère neutre dans le polyélectrolyte réticulé est comprise entre 10 % et 90% molaire.

9. Latex inverse auto-inversible ou microlatex inverse auto-inversible tel que défini à la revendication 8, pour lequel la proportion en unité monomère neutre dans le polyélectrolyte réticulé est comprise entre 50 % et 70 % molaire.

10. Latex inverse auto-inversible ou microlatex inverse auto-inversible tel que défini à l'une des revendications 2 à 9, pour lequel la proportion en monomère cationique dans le polyélectrolyte réticulé est comprise entre 1 % et 75 % molaire.

11. Latex inverse auto-inversible ou microlatex inverse auto-inversible tel que défini à la revendication 10, pour lequel la proportion en monomère cationique dans le polyélectrolyte réticulé est comprise entre 3 % et 30 % molaire.

12. Latex inverse auto-inversible ou micro latex inverse auto-inversible tel que défini à l'une des revendications 2 à 11, dans lequel le polyélectrolyte réticulé est un terpolymère réticulé d'acide 2-méthyl 2-[(1-oxo 2-propènyl) amino] 1-propanesulfonique, partiellement ou totalement salifié sous forme de sel de sodium, d'acrylamide et de chlorure d'acrylamido propyl N,N,N-triméthylammonium.

13. Procédé de préparation de microgels par dilution dans l'eau d'un latex inverse auto-inversible ou d'un microlatex inverse auto-inversible d'un polyélectrolyte réticulé tel que défini ci-à l'une des revendications 2 à 12, dans l'eau.

14. Procédé de traitement de formations rocheuses telles que des puits producteurs à huile ou à gaz, des puits injecteurs d'eau visant à balayer les réservoirs d'hydrocarbures ou des puits de gaz de mine ou de puits de stockage de gaz **caractérisé en ce qu'**il comprend une étape d'injection dans ou sur ladite formation rocheuse ou dans ledit puits, d'un microgel obtenu par dilution dans l'eau d'un latex inverse auto-inversible, ou d'un microlatex inverse auto-inversible tel que défini à l'une des revendications 2 à 12.

## Patentansprüche

1. Verfahren zur Behandlung von Gesteinsformationen, wie etwa von Öl- oder Gasförderschächten, von Schächten zum Einleiten von Wasser zwecks Spülung von Kohlenwasserstofflagerstätten, oder von Grubengasschächten oder von Gasspeicherschächten, wobei das Verfahren **dadurch gekennzeichnet ist, dass** es einen Schritt des Einleitens, auf oder in die Gesteinsformation oder in den Schacht, eines Mikrogels umfasst, welches erhalten wird, indem ein Inverslatex, der zur selbsttätigen Phasenumkehr befähigt ist und 20 % bis 70 % nach Masse an einem vernetzten Polyelektrolyten umfasst, oder ein inverser Mikrolatex, der zur selbsttätigen Phasenumkehr befähigt ist und 15 % bis 40 % nach Masse an einem vernetzten Polyelektrolyten umfasst, in Wasser verdünnt wird.
wobei der Inverslatex, welcher zur selbsttägigen Phasenumkehr befähigt ist, oder der inverse Mikrolatex, welcher zur selbsttägigen Phasenumkehr befähigt ist, erhalten wird, indem freie, teilweise oder vollständig in die Salzform überführte 2-Methyl-2-[(1-oxo-2-propenyl)amino]-1-propansulfonsäure, mindestens ein kationisches Monomer, das aus 2,N,N,N-Tetramethyl-2-[(1-oxo-2-propenyl)amino]propanammoniumchlorid, N,N,N-Trimethyl-3-[(1-oxo-2-propenyl)amino]propanammoniumchlorid, Diallyldimethylammoniumchlorid, N,N,N-Trimethyl-2-[(1-oxo-2-propenyl)amino]ethanammoniumchlorid, N,N,N-Trimethyl-2-[(1-oxo-2-methyl-2-propenyl)amino]ethanammoniumchlorid, N,N,N-Trimethyl-3-[(1-oxo-2-methyl-2-propenyl)amino]propanammoniumchlorid ausgewählt ist, und mindestens ein neutrales Monomer, das aus Acrylamid, N,N-Dimethylacrylamid, N-[2-Hydroxy-1,1-bis-(hydroxymethyl)ethyl]propenamid oder (2-Hydroxyethyl)acrylat ausgewählt ist, einer Copolymerisation in Gegenwart eines Vernetzungsmittels unterzogen werden, wobei das Vernetzungsmittel aus Diallyloxyessigsäure oder dessen Natriumsalz, Triallylamin, Diallylharnstoff, Trimethylolpropantriacrylat, Ethylenglykoldimethacrylat, Diethylenglykoldiacrylat, Methylen-bis-(acrylamid) oder einer Mischung aus mehreren dieser Verbindungen ausgewählt ist.

2. Inverslatex, der zur selbsttägigen Phasenumkehr befähigt ist, wobei er 20 % bis 70 % nach Masse an einem vernetzten Polyelektrolyten umfasst, welcher erhalten wird, indem freie, teilweise oder vollständig in die Salzform überführte 2-Methyl-2-[(1-oxo-2-propenyl)amino]-1-propansulfonsäure, N,N,N-Trimethyl-3-[(1-oxo-2-propenyl)amino]propanammoniumchlorid und mindestens ein neutrales Monomer, das aus Acrylamid, N,N-Dimethylacrylamid, N-[2-Hydroxy-1,1-bis-(hydroxymethyl)ethyl]propenamid oder (2-Hydroxyethyl)acrylat ausgewählt ist, einer Copolymerisation in Gegenwart eines Vernetzungsmittels unterzogen werden,
wobei das Vernetzungsmittel aus Diallyloxyessigsäure oder dessen Natriumsalz, Triallylamin, Diallylharnstoff, Trimethylolpropantriacrylat, Ethylenglykoldimethacrylat, Diethylenglykoldiacrylat, Methylen-bis-(acrylamid) oder einer Mischung aus mehreren dieser Verbindungen ausgewählt ist.

3. Inverser Mikrolatex, der zur selbsttägigen Phasenumkehr befähigt ist, wobei er 15 % bis 40 % nach Masse eines vernetzten Polyelektrolyten umfasst, welcher erhalten wird, indem freie, teilweise oder vollständig in die Salzform überführte 2-Methyl-2-[(1-oxo-2-propenyl)amino]-1-propansulfonsäure, N,N,N-Trimethyl-3-[(1-oxo-2-propenyl)amino]propanammoniumchlorid mit mindestens einem neutralen Monomer, das aus Acrylamid, N,N-Dimethylacrylamid, N-[2-Hydroxy-1,1-bis(hydroxymethyl)ethyl]propenamid oder (2-Hydroxyethyl)acrylat ausgewählt ist, in Gegenwart eines Vernetzungsmittels copolymerisiert werden,
wobei das Vernetzungsmittel aus Diallyloxyessigsäure oder dessen Natriumsalz, Triallylamin, Diallylharnstoff, Trimethylolpropantriacrylat, Ethylenglykoldimethacrylat, Diethylenglykoldiacrylat, Methylen-bis-(acrylamid) oder einer Mischung aus mehreren dieser Verbindungen ausgewählt ist.

4. Inverslatex, der zur selbsttägigen Phasenumkehr befähigt ist, nach Anspruch 2,
wobei er 25 % bis 60 % nach Masse an vernetztem Polyelektrolyten umfasst.

5. Inverser Mikrolatex, der zur selbsttägigen Phasenumkehr befähigt ist, nach Anspruch 3, wobei er 20 % bis 30 % nach Masse an vernetztem Polyelektrolyten umfasst.

6. Inverslatex, der zur selbsttägigen Phasenumkehr befähigt ist, oder inverser Mikrolatex, der zur selbsttägigen Phasenumkehr befähigt ist, gemäß der Begriffsbestimmung in einem der Ansprüche 2 bis 5, bei welchem der Anteil der freien 2-Methyl-2-[(1-oxo-2-propenyl)amino]-1-propansulfonsäure an den Monomereinheiten im vernetzten Polyelektrolyten im Bereich von 1 % bis 75 % nach Mol liegt.

7. Inverslatex, der zur selbsttägigen Phasenumkehr befähigt ist, oder inverser Mikrolatex, der zur selbsttägigen Phasenumkehr befähigt ist, gemäß der Begriffsbestimmung in Anspruch 6, bei welchem der Anteil an kationischem Monomer im vernetzten Polyelektrolyten im Bereich von 5 % bis 40 % nach Mol liegt.

8. Inverslatex, der zur selbsttägigen Phasenumkehr befähigt ist, oder inverser Mikrolatex, der zur selbsttägigen Phasenumkehr befähigt ist, gemäß der Begriffsbestimmung in einem der Ansprüche 2 bis 7, bei welchem der Anteil an neutralen Monomereinheiten im vernetzten Polyelektrolyten im Bereich von 10 % bis 90 % nach Mol liegt.

9. Inverslatex, der zur selbsttägigen Phasenumkehr befähigt ist, oder inverser Mikrolatex, der zur selbsttägigen Phasenumkehr befähigt ist, gemäß der Begriffsbestimmung in Anspruch 8, bei welchem der Anteil an neutralen Monomereinheiten im vernetzten Polyelektrolyten im Bereich von 50 % bis 70 % nach Mol liegt.

10. Inverslatex, der zur selbsttägigen Phasenumkehr befähigt ist, oder inverser Mikrolatex, der zur selbsttägigen Phasenumkehr befähigt ist, gemäß der Begriffsbestimmung in einem der Ansprüche 2 bis 9, bei welchem der Anteil an kationischem Monomer im vernetzten Polyelektrolyten im Bereich von 1 % bis 75 % nach Mol liegt.

11. Inverslatex, der zur selbsttägigen Phasenumkehr befähigt ist, oder inverser Mikrolatex, der zur selbsttägigen Phasenumkehr befähigt ist, gemäß der Begriffsbestimmung in Anspruch 10, bei welchem der Anteil an kationischem Monomer im vernetzten Polyelektrolyten im Bereich von 3 % bis 30 % nach Mol liegt.

12. Inverslatex, der zur selbsttägigen Phasenumkehr befähigt ist, oder inverser Mikrolatex, der zur selbsttägigen Phasenumkehr befähigt ist, gemäß der Begriffsbestimmung in einem der Ansprüche 2 bis 11, wobei es sich bei dem vernetzten Polyelektrolyten um ein vernetztes Terpolymer aus teilweise oder vollständig in ihr Natriumsalz überführter 2-Methyl-2-[(1-oxo-2-propenyl)amino]-1-propansulfonsäure, Acrylamid und Acrylamidopropyl-N,N,N-trimethylammoniumchlorid handelt.

13. Verfahren zur Herstellung von Mikrogelen, indem ein Inverslatex, der zur selbsttägigen Phasenumkehr befähigt ist, oder ein inverser Mikrolatex, der zur selbsttägigen Phasenumkehr befähigt ist, ein vernetzter Polyelektrolyt gemäß der Begriffsbestimmung in einem der Ansprüche 2 bis 12 in Wasser verdünnt werden.

14. Verfahren zur Behandlung von Gesteinsformationen, wie etwa von Öl- oder Gasförderschächten, von Schächten zum Einleiten von Wasser zwecks Spülung von Kohlenwasserstofflagerstätten, oder von Grubengasschächten oder von Gasspeicherschächten, **dadurch gekennzeichnet, dass** es einen Schritt des Einleitens, in oder auf die Gesteinsformation oder in den Schacht, eines Mikrogels umfasst, welches erhalten wird, indem ein Inverslatex, der zur selbsttätigen Phasenumkehr befähigt ist, oder ein inverser Mikrolatex, der zur selbsttätigen Phasenumkehr befähigt ist, gemäß der Begriffsbestimmung in einem der Ansprüche 2 bis 12 in Wasser verdünnt wird.

## Claims

1. Process for the treatment of rock formations such as oil or gas producing wells, water injection wells targeted at flushing hydrocarbon reservoirs or mine gas wells or gas storage wells, said process being **characterized in that** it comprises a stage of injection onto, or into, said rock formation or into said well of a microgel obtained by diluting, in water, a self-invertible inverse latex comprising from 20 to 70% by weight of a crosslinked polyelectrolyte, or a self-invertible inverse microlatex comprising from 15 to 40% by weight of a crosslinked polyelectrolyte
said self-invertible inverse latex or said self-invertible inverse microlatex being obtained by copolymerization, in the presence of a crosslinking agent, of free, partially salified or completely salified 2-methyl-2-[(1-oxo-2-propenyl)amino]-1-propanesulfonic acid, of at least one cationic monomer chosen from 2,N,N,N-tetramethyl-2-[(1-oxo-2-propenyl)amino]propanammonium chloride, N,N,N-trimethyl-3-[(1-oxo-2-propenyl)amino]propanammonium chloride, diallyldimethylammonium chloride, N,N,N-trimethyl-2-[(1-oxo-2-propenyl)amino]ethanammonium chloride, N,N,N-trimethyl-2-[(1-oxo-2-methyl-2-propenyl)amino]ethanammonium chloride or N,N,N-trimethyl-3-[(1-oxo-2-methyl-2-propenyl)amino]propanammonium chloride, and of at least one neutral monomer chosen from acrylamide, N,N-dimethylacrylamide, N-[2-hydroxy-1,1-bis(hydroxymethyl)ethyl]propenamide or 2-hydroxyethyl acrylate,
the crosslinking agent being chosen from diallyloxyacetic acid or its sodium salt, triallylamine, diallylurea, trimethylolpropane triacrylate, ethylene glycol dimethacrylate, diethylene glycol diacrylate, methylenebis(acrylamide) or a mixture of several of these compounds.

2. Self-invertible inverse latex comprising from 20 to 70% by weight of a crosslinked polyelectrolyte obtained by copolymerization, in the presence of a crosslinking agent, of free, partially salified or completely salified 2-methyl-2-[(1-oxo-2-propenyl)amino]-1-propanesulfonic acid, of N,N,N-trimethyl-3-[(1-oxo-2-propenyl)amino]propanammonium chloride and of at least one neutral monomer chosen from acrylamide, N,N-dimethylacrylamide, N-[2-hydroxy-1,1-bis(hydroxymethyl)ethyl]propenamide or 2-hydroxyethyl acrylate,
the crosslinking agent being chosen from diallyloxyacetic acid or its sodium salt, triallylamine, diallylurea, trimethylolpropane triacrylate, ethylene glycol dimethacrylate, diethylene glycol diacrylate, methylenebis(acrylamide) or a mixture of several of these compounds.

3. Self-invertible inverse microlatex comprising from 15 to 40% by weight of a crosslinked polyelectrolyte obtained by copolymerization, in the presence of a crosslinking agent, of free, partially salified or completely salified 2-methyl-2-[(1-oxo-2-propenyl)amino]-1-propanesulfonic acid, of N,N,N-trimethyl-3-[(1-oxo-2-propenyl)amino]propanammonium chloride and of at least one neutral monomer chosen from acrylamide, N,N-dimethylacrylamide, N-[2-hydroxy-1,1-bis(hydroxymethyl)ethyl]propenamide or 2-hydroxyethyl acrylate,
the crosslinking agent being chosen from diallyloxyacetic acid or its sodium salt, triallylamine, diallylurea, trimethylolpropane triacrylate, ethylene glycol dimethacrylate, diethylene glycol diacrylate, methylenebis(acrylamide) or a mixture of several of these compounds.

4. Self-invertible inverse latex according to Claim 2, comprising from 25 to 60% by weight of crosslinked polyelectrolyte.

5. Self-invertible inverse microlatex according to Claim 3, comprising from 20 to 30% by weight of crosslinked polyelectrolyte.

6. Self-invertible inverse latex or self-invertible inverse microlatex as defined in one of Claims 2 to 5, for which the proportion of free 2-methyl-2-[(1-oxo-2-propenyl)amino]-1-propanesulfonic acid monomer unit in the crosslinked polyelectrolyte is between 1 and 75 mol%.

7. Self-invertible inverse latex or self-invertible inverse microlatex as defined in Claim 16, for which the proportion of cationic monomer in the crosslinked polyelectrolyte is between 5 and 40 mol%.

8. Self-invertible inverse latex or self-invertible inverse microlatex as defined in one of Claims 2 to 7, for which the proportion of neutral monomer unit in the crosslinked polyelectrolyte is between 10 and 90 mol%.

9. Self-invertible inverse latex or self-invertible inverse microlatex as defined in Claim 8, for which the proportion of neutral monomer unit in the crosslinked polyelectrolyte is between 50 and 70 mol%.

10. Self-invertible inverse latex or self-invertible inverse microlatex as defined in one of Claims 2 to 9, for which the proportion of cationic monomer in the crosslinked polyelectrolyte is between 1 and 75 mol%.

11. Self-invertible inverse latex or self-invertible inverse microlatex as defined in Claim 10, for which the proportion of cationic monomer in the crosslinked polyelectrolyte is between 3 and 30 mol%.

12. Self-invertible inverse latex or self-invertible inverse microlatex as defined in one of Claims 2 to 11, in which the crosslinked polyelectrolyte is a crosslinked terpolymer of 2-methyl-2-[(1-oxo-2-propenyl)amino]-1-propanesulfonic acid, partially or completely salified in the sodium salt form, of acrylamide and of acrylamidopropyl-N,N,N-trimethylammonium chloride.

13. Process for the preparation of microgels by dilution in water of a self-invertible inverse latex or of a self-invertible inverse microlatex of a crosslinked polyelectrolyte as defined in one of Claims 2 to 12.

14. Process for the treatment of rock formations such as oil or gas producing wells, water injection wells targeted at flushing hydrocarbon reservoirs or mine gas wells or gas storage wells, **characterized in that** it comprises a stage of injection into or onto said rock formation or into said well of the microgel obtained by dilution in water of a self-invertible inverse latex or of a self-invertible inverse microlatex as defined in one of Claims 2 to 12.
